# EUROPEAN PATENT APPLICATION

(11) **EP 4 517 961 A1**
(43) Date of publication of application: **05.03.2025**
(21) Application number: 24167462.1
(22) Date of filing: 28.03.2024
(51) Int. Cl.: H01M 50/209, H01M 50/50, H01M 50/503

(54) **BATTERY MODULE AND BATTERY PACK**

(30) Priority: 31.08.2023 CN 202322365743 U
(71) Applicant: Eve Energy Co., Ltd., Huizhou, Guangdong 516006 (CN)
(72) Inventor: LU, Kaihang, Huizhou, 516006 (CN); WU, Lihua, Huizhou, 516006 (CN); CHEN, Zhaohai, Huizhou, 516006 (CN); CHEN, Zhiwei, Huizhou, 516006 (CN)
(74) Representative: Murgitroyd & Company

(57) **Abstract**

The present disclosure provides a battery module and a battery pack. The battery module includes a battery cell group (100) and an end plate assembly (200). The end plate assembly (200) includes an end plate (210), an output pole base (220), an output pole connection bar (230), and a protective cover (240). The output pole connection bar (230) includes a first connection part (231) and a second connection part (232). The first connection part (231) is provided on a side of the output pole base (220) close to the top surface (103), the second connection part (232) has one bend from the side of the output pole base (220) close to the top surface (103) to a side of the output pole base (220) close to one of the side surfaces and is connected to the output pole base (220).

## Description

### TECHNICAL FIELD

The present disclosure relates to the field of battery technologies, and in particular, to a battery module and a battery pack.

### BACKGROUND

Output poles of a battery module usually have an exposed metal output pole connection bar structure fixed to an output pole base. In the related technology, the output pole base is fixed on an end plate. One end of the output pole connection bar is connected to a pole of a battery module, and the other end of the output pole connection bar is connected and fixed to the output pole base. The output pole connection bar usually needs to be bent multiple times from a side where the pole of the battery module is located to a side of the output pole base away from the end plate to be mounted to and fixed with the output pole base. The multiple bends of the output pole connection bar not only increases a length of the output pole connection bar, leading to an increase in cost, but also occupy internal space of a battery pack, leading to insufficient space for electrical connections between adjacent battery modules.

### TECHNICAL PROBLEMS

The present disclosure provides a battery module and a battery pack to solve the above technical problems.

### TECHNICAL SOLUTIONS

In a first aspect, the present disclosure provides a battery module, including:
a battery cell group including a plurality of battery cells arranged along a first direction, wherein the battery cell group has two opposite end surfaces along the first direction, two opposite side surfaces along a second direction, and a top surface and a bottom surface opposite to each other along a third direction, the top surface is provided with a pole , the first direction is perpendicular to the second direction, and the third direction is perpendicular to the first direction and the second direction; and
an end plate assembly comprising an end plate, an output pole base, an output pole connection bar, and a protective cover,
wherein the end plate is provided on an end surface of the end surfaces,
the output pole base is provided on a side of the end plate away from the battery cell group,
the output pole connection bar comprises a first connection part and a second connection part connected to the first connection part, the first connection part is provided on a side of the output pole base close to the top surface , the second connection part has one bend from the side of the output pole base close to the top surface to a side of the output pole base close to one side surface of the side surfaces and is connected to the output pole base , and
the protective cover is disposed on the side of the output pole base close to the side surface and covers at least part of the second connection part.

In a second aspect, the present application provides a battery pack, including the battery module as described in the first aspect.

### BENEFICIAL EFFECTS

The beneficial effects of the present disclosure are as below. The present disclosure provides a battery module and a battery pack. An output pole connection bar of the battery module includes a first connection part and a second connection part. The first connection part is provided on a side of an output pole base close to a top surface of a battery cell group, and the second connection part has one bend to a side of the output pole base close to a side surface of the battery cell group to be connected to the output pole base, so that the output pole connection bar and a pole is on a same side, the output pole connection bar is entirely disposed on the side of the output pole base, which prevents an increase in a material length, an increase in the cost, and insufficient space, etc., resulted from bending the output pole connection bar several times to a side of the output pole base away from an end plate to be connected to the output pole base. With an improved output pole connection structure, the present disclosure may effectively reduce a production cost of the battery module, save space, and improve an assembly efficiency of the battery module.

### BRIEF DESCRIPTION OF THE DRAWINGS

FIG. 1 is a schematic structural diagram of a battery module provided by related technologies.
FIG. 2 is a schematic structural diagram of a battery module provided by some embodiments of the present disclosure.
FIG. 3 is a partial cross-sectional view along a first direction of the battery module provided by the embodiments of FIG. 2.
FIG. 4 is a partial cross-sectional view along a third direction of the battery module provided by the embodiments of FIG. 2.

List of reference numerals:
100-battery cell group, 101-first end surface, 102-first side surface, 103-top surface, 110-battery cell, 111-pole, 200-end plate assembly, 210-end plate, 211-buckle, 220-output pole base, 221-first surface, 222-first side, 223-third side, 224-insertion slot, 230-output pole connection bar, 231-first connection part, 232-second connection part, 240-protective cover, 241-first side wall, 242-opening, 243-elastic insertion part, 244-clamping slot, 250-bolt, 251-first screw hole, 252-second screw hole.

### DETAILED DESCRIPTION

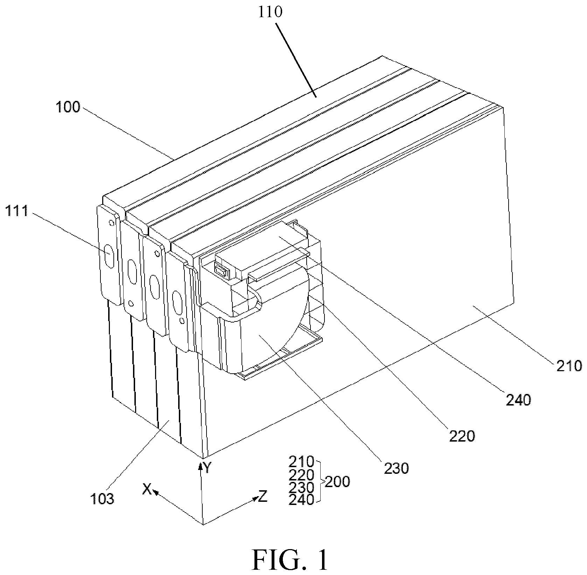

FIG. 1 shows a schematic structural diagram of a battery module provided by related technologies. The battery module includes a battery cell group 100 and an end plate assembly 200.

The battery cell group 100 includes a plurality of battery cells 110 arranged along a first direction. The battery cell group 100 has two opposite end surfaces along the first direction, two opposite side surfaces along a second direction, and a top surface 103 and a bottom surface opposite to each other along a third direction. The top surface 103 is provided with poles 111. The first direction is perpendicular to the second direction, and the third direction is perpendicular to the first direction and the second direction. In the figure, the first direction is the direction X, the second direction is the direction Y, and the third direction is the direction Z.

The end plate assembly 200 includes an end plate 210, an output pole base 220, an output pole connection bar 230, and a protective cover 240. The end plate 210 is provided on one of the end surfaces. The output pole base 220 is provided on a side of the end plate 210 away from the battery cell group 100. The output pole connection bar 230 has one end electrically connected to one of the poles 111, extends toward the output pole base 220 along the first direction, and then is bent toward a side of the output pole base 220 away from the end plate 210 and extends along the third direction, and then is bent toward a side of the output pole base 220 close to a side surface of the battery cell group and is bolted to the output pole base 220. The protective cover 240 is disposed on a side of the output pole base 220 close to the side surface and covers a connection part between the output pole connection bar 230 and the output pole base 220.

In the above related art, the output pole connection bar 230 is bent several times to arrive at the side of the output pole base 220 away from the end plate 210 and then is connected to the output pole base 220, which increases the effect length of the output pole connection bar 230, resulting in an increase in a manufacturing cost of the battery module. In addition, the output pole connection bar 230, which is bent to the side of the output pole base 220 away from the end plate 210, occupies the space between the battery modules, resulting in insufficient space for electrical connections between the battery modules.

In order to solve the above problems, the present disclosure provides a battery module and a battery pack.

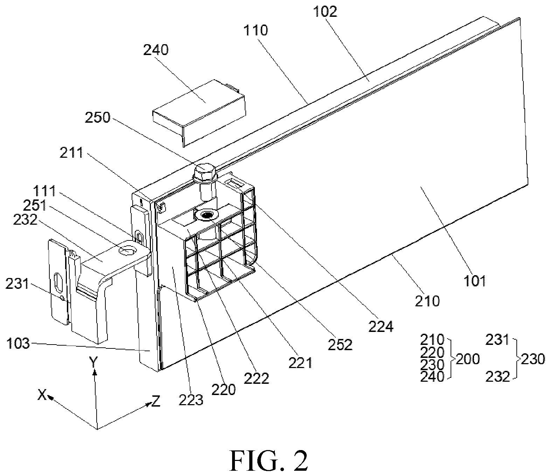

FIG. 2 shows a schematic structural diagram of a battery module provided by the present disclosure. The battery module includes a battery cell group 100 and an end plate assembly 200.

The battery cell group 100 includes a plurality of battery cells 110 (only one cell 110 which is adjacent to the end plate assembly 200 is shown in the figure) arranged along a first direction. The battery cell group 100 has two opposite end surfaces along the first direction, two opposite side surfaces along a second direction, and a top surface 103 and a bottom surface opposite to each other along a third direction. The top surface 103 is provided with poles 111 (only one pole 111 of the poles 111 is shown in the figure for the cell 100). Any two of the first direction, the second direction and the third direction are perpendicular to each other.

The end plate assembly 200 includes an end plate 210, an output pole base 220, an output pole connection bar 230, and a protective cover 240. The end plate 210 is provided on one of the end surfaces. The output pole base 220 is provided on a side of the end plate 210 away from the battery cell group 100. The output pole connection bar 230 includes a first connection part 231 and a second connection part 232 connected to the first connection part 231. The first connection part 231 extends along the first direction and is electrically connected to the pole 111. The first connection part 231 is provided on a side of the output pole base 220 close to the top surface 103. The second connection part 232 has one bend from the side of the output pole base 220 close to the top surface 103 to a side of the output pole base 220 close to one of the side surfaces and is connected to the output pole base 220. The protective cover 240 is disposed on the side of the output pole base 220 close to the side surface and covers at least part of the second connection part 232.

Specifically, as shown in FIG. 2, the battery cell group 100 has a first end surface 101 and a second end surface opposite to each other along the first direction, a first side surface 102 and a second side surface opposite to each other along the second direction, and the top surface 103 and the bottom surface opposite to each other along the third direction. The output pole base 220 has a first surface 221 and a second surface opposite to each other along the first direction, a first side 222 and a second side opposite to each other along the second direction, and a third side 223 and a fourth side opposite to each other along the third direction. The second side surface is in contact with the first end surface 101. The first side 222 is close to the first side surface 102. The third side 223 is close to the top surface 103.

The output pole connection bar 230 includes the first connection part 231 for connecting with the pole 111 and the second connection part 232 for connecting with the output pole base 220. The first connection part 231 is located on the third side 223 of the output pole base 220 and is on the same side as the pole 111. The second connection part 232 is located on the first side 222 of the output pole base 220 and is fixed on the first side 222 of the output pole base 220.

Since it is difficult to install and fix the protective cover longitudinally (along the Y direction) in related technologies, and the installation of the protective cover needs to meet the international electrical protection level IPXXB, the output pole connection bar of the battery module is usually installed horizontally. However, the horizontal installation requires the output pole connection bar to be bent multiple times, which increases the length of the output pole connection bar and the cost. In the present disclosure, by arranging a main part of the output pole connection bar 230 (i.e., the first connection part 231) on the same side (i.e., the third side 223) as the pole 111, the number of bends of the first connection part 231 is reduced, and the length of the first connection part 231 connected between the pole 111 and the output pole base 220 is shortened, which avoids an increase in a material length and in cost resulted from bending the output pole connection bar 230 from the third side 223 of the output pole base 220 to the first surface 221 and then to the first side 222. At the same time, the second connection part 232 connecting the first connection part 231 and the output pole base 220 is directly bent from the third side 223 to the first side 222 in one go. The connection between the first connection part 231 and the output pole base 220 is achieved through one bending, which may prevent the first connection part 231 from being bent to the first side 222 and then being connected to the output pole base 220, thereby reducing the number of bends. In the present disclosure, the first connection part 231 and the second connection part 232 are connected to form an L shape, and the output pole connection bar 230 is entirely disposed on a side (i.e., the third side 223 and the first side 222) of the output pole base 220, which prevents the output pole connection bar 230 from being installed on the first surface 221 of the output pole base 220, thereby preventing the output pole connection bar 230 from occupying the space between the modules and causing insufficient space for the electrical connections between the battery modules.

Further, an aluminum bar is arranged over the pole(s) 111 to be electrically connected to the pole(s) 111. The output pole connection bar 230 is welded and connected to the aluminum bar to achieve electrical connection with the pole(s) 111. In some embodiments of the present disclosure, the output pole connection bar 230 may be a copper bar, but is not limited thereto.

In some embodiments, the output pole base 220 is provided at an end of the end plate 210 close to the pole 111 to reduce the length of the output pole connection bar 230, reduce the cost, and facilitate the connection between the output pole connection bar 230 and the pole 111 and the output pole base 220.

Furthermore, the third side 223 of the output pole base 220 and the top surface 103 of the battery cell group 100 may be located on a same plane. The first connection part 231 extends along the first direction and is electrically connected with the pole 111, so that the first connection part 231 does not have a bend, thereby reducing a connection length of the first connection part 231 and further reducing the cost.

In some embodiments, the output pole base 220 and the end plate 210 are an integral structure. Specifically, the end plate 210 may be a plastic structure. The output pole base 220 and the end plate 210 may be integrally injection molded during the manufacture of the end plate 210, so that the output pole base 220 and the end plate 210 may form the integral structure, and the output pole base 220 is integrated on the end plate 210. Using the integrated end plate 210 to provide a fixed interface may further improve connection stability of the output pole connection bar 230.

In some embodiments, the second connection part 232 is bolted to the output pole base 220 to facilitate disassembly of the output pole connection bar 230, facilitating maintenance or replacement.

As shown in FIG. 2, the second connection part 232 is provided with a first screw hole 251, and the first side 222 of the output pole base 220 is provided with a second screw hole 252. A bolt 250 passes through the first screw hole 251 and the second screw hole 252 to fix the second connection part 232 on the first side 222, realizing a fixed connection between the output pole connection bar 230 and the output pole base 220.

It should be noted that the second connection part 232 and the output pole base 220 may also be connected in other ways, such as but not limited to welding.

In order to protect the connection ends of the output pole connection bar 230 and the output pole base 220, the protective cover 240 is usually provided at the connection ends to meet the electrical protection level requirement of the battery module. As shown in FIG. 2, the protective cover 240 is disposed on the first side 222 of the output pole base 220 and covers the second connection part 232.

In some embodiments, the protective cover 240 and the end plate 210 may be connected through a snap fit connection.

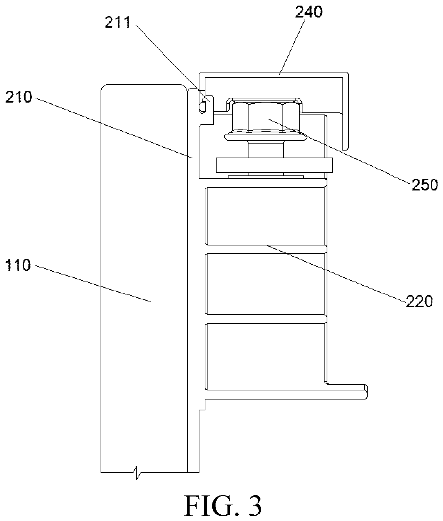

Specifically, as shown in FIGS. 2-4, the protective cover 240 has a first side wall 241 on a side close to the end plate 210, an opening 242 is provided at an end of the first side wall 241 of the protective cover 240 close to the top surface 103, and a buckle 211 is provided at an end of the end plate 210 close to the top surface 103. The buckle 211 is inserted into the opening 242 to fixedly connect the protective cover 240 and the end plate 210.

In some embodiments, the protective cover 240 is elastically connected to the output pole base 220.

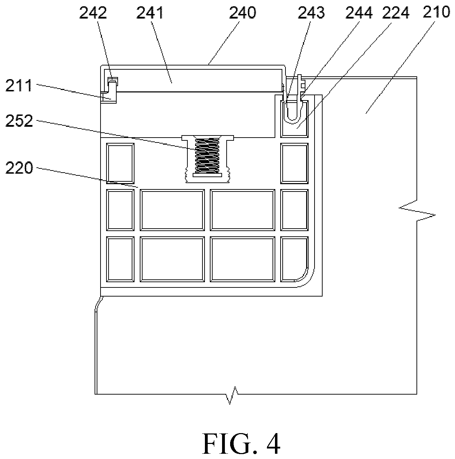

Specifically, as shown in FIGS. 2 and 4, an elastic insertion part 243 is provided at an end of the protective cover 240 away from the top surface 103, an insertion slot 224 is provided at an end of the output pole base 220 facing towards the protective cover 240, and the elastic insertion part 243 is inserted into the insertion slot 224 to fixedly connect the protective cover 240 and the output pole base 220.

Further, as shown in FIG. 4, the elastic insertion part 243 is a U-shaped elastic member. One end of the U-shaped elastic member is connected to the protective cover 240 and the other end is a free end. An open side of the U-shaped elastic member faces the first side surface 102, and a bottom side of the U-shaped elastic member extends into the insertion slot 224. A clamping slot 244 is provided on an outer wall of the U-shaped elastic member. An edge of an opening of the insertion slot 224 is snap-fit in the clamping slot 244, so that the U-shaped elastic member is snap-fit and fixed with the insertion slot 224, thereby achieving a fixed connection between the protective cover 240 and the output pole base 220.

The present disclosure further provides a battery pack, which includes a box and a plurality of battery modules as described above, and the plurality of the battery modules are arranged in the box as an array.

Embodiments of the present disclosure provide a battery module and a battery pack. An output pole connection bar of the battery module includes a first connection part and a second connection part. The first connection part is provided on a side of an output pole base close to a top surface of a battery cell group, and the second connection part has one bend to a side of the output pole base close to a side surface of the battery cell group and is connected to the output pole base, so that the output pole connection bar and the poles are on a same side, the output pole connection bar is entirely disposed on a side of the output pole base, which prevents an increase in a material length, an increase in the cost, and insufficient space, etc., resulted from an output pole connection bar having several bends to arrive at a side of the output pole base away from an end plate and then be connected to the output pole base. By improving an output pole connection structure, the present disclosure may effectively reduce a production cost of the battery module, save space, and improve an assembly efficiency of the battery module.

## Claims

1. A battery module, **characterized by** comprising:
a battery cell group (100) comprising a plurality of battery cells (110) arranged along a first direction,
wherein the battery cell group (100) has two opposite end surfaces along the first direction, two opposite side surfaces along a second direction, and a top surface (103) and a bottom surface opposite to each other along a third direction, the top surface (103) is provided with a pole (111), the first direction is perpendicular to the second direction, and the third direction is perpendicular to the first direction and the second direction; and
an end plate assembly (200) comprising an end plate (210), an output pole base (220), an output pole connection bar (230), and a protective cover (240),
wherein the end plate (210) is provided on an end surface of the end surfaces,
the output pole base (220) is provided on a side of the end plate (210) away from the battery cell group (100),
the output pole connection bar (230) comprises a first connection part (231) and a second connection part (232) connected to the first connection part (231), the first connection part (231) is provided on a side of the output pole base (220) close to the top surface (103), the second connection part (232) has one bend from the side of the output pole base (220) close to the top surface (103) to a side of the output pole base (220) close to one side surface of the side surfaces and is connected to the output pole base (220), and
the protective cover (240) is disposed on the side of the output pole base (220) close to the side surface and covers at least part of the second connection part (232).

2. The battery module according to claim 1, wherein the protective cover (240) is connected to the end plate (210) through a snap fit connection.

3. The battery module according to claim 2, wherein an opening (242) is provided at an end of the protective cover (240) close to the top surface (103), a buckle (211) is provided at an end of the end plate (210) close to the top surface (103), and the buckle (211) is inserted into the opening (242) to fixedly connect the protective cover (240) and the end plate (210).

4. The battery module according to claim 3, wherein the protective cover (240) is elastically connected to the output pole base (220).

5. The battery module according to claim 4, wherein an elastic insertion part (243) is provided at an end of the protective cover (240) away from the top surface (103), an insertion slot (224) is provided at an end of the output pole base (220) facing towards the protective cover (240), and the elastic insertion part (243) is inserted into the insertion slot (224) to fixedly connect the protective cover (240) and the output pole base (220).

6. The battery module according to any one of claims 1 to 5, wherein the output pole base (220) and the end plate (210) are integral with each other.

7. The battery module according to any one of claims 1 to 5, wherein the output pole base (220) is provided at an end of the end plate (210) close to the pole (111).

8. The battery module according to any one of claims 1 to 5, wherein the first connection part (231) extends along the first direction and is electrically connected to the pole (111).

9. The battery module according to any one of claims 1 to 5, wherein the second connection part (232) is bolted to the output pole base (220).

10. A battery pack, **characterized by** comprising the battery module according to any one of claims 1-9.
